# EUROPEAN PATENT SPECIFICATION

(11) **EP 3 388 392 B1**
(45) Date of publication and mention of the grant of the patent: **20.01.2021**
(21) Application number: 17166394.1
(22) Date of filing: 12.04.2017
(51) Int. Cl.: C01B 39/02, B01J 29/76, B01J 35/04, B01J 37/02

(54) **COPPER-CONTAINING ZEOLITES HAVING A LOW ALKALI METAL CONTENT, METHOD OF MAKING THEREOF, AND THEIR USE AS SCR CATALYSTS**
KUPFER ENTHALTENDE, KLEINPORIGE ZEOLITE MIT NIEDRIGERM ALKALIMETALLGEHALT, VERFAHREN ZU IHRER HERSTELLUNG UND IHRE VERWENDUNG ALS SCR-KATALYSATOREN
ZÉOLITES À PETITS PORES CONTENANTS DU CUIVRE AYANT UNE FAIBLE TENEUR DE MÉTAUX ALCALINS, PROCÉDÉS DE LEUR FABRICATION, ET LEUR UTILISAION COMME CATALYSEURS SCR

(43) Date of publication of application: 17.10.2018
(73) Proprietor: UMICORE AG & CO. KG, 63457 Hanau-Wolfgang (DE)
(72) Inventor: SCHUETZE, Frank-Walter, 63739 Aschaffenburg (DE); VAN TENDELOO, Leen, 2500 Lier (BE); ECKHOFF, Stephan, 63755 Alzenau (DE); VAN GENECHTEN, Dirk, 3582 Koersel (BE)

(56) References cited:
- WO-A2-2011/073390
- WO-A2-2011/073398
- US-A- 5 369 070
- US-A1- 2015 151 285
- US-A1- 2015 151 286
- NURIA MARTÍN ET AL: "Efficient synthesis of the Cu-SSZ-39 catalyst for DeNOx applications", CHEMICAL COMMUNICATIONS - CHEMCOM., vol. 51, no. 55, 1 January 2015 (2015-01-01), pages 11030-11033, XP055260185, ISSN: 1359-7345, DOI: 10.1039/C5CC03200H
- LIJUAN XIE ET AL: "Excellent Performance of One-Pot Synthesized Cu-SSZ-13 Catalyst for the Selective Catalytic Reduction of NO x with NH 3", ENVIRONMENTAL SCIENCE & TECHNOLOGY, vol. 48, no. 1, 7 January 2014 (2014-01-07), pages 566-572, XP055285466, US ISSN: 0013-936X, DOI: 10.1021/es4032002

## Description

The present invention relates to copper-containing small-pore zeolites for use in the selective catalytic reduction of nitrogen oxides by reaction with NH₃ as reductant (NH₃-SCR), a one-step synthesis method of preparing these copper-containing small-pore zeolites according to the invention as well as towards the use in NH3-SCR catalysis. In particular, the invention provides a copper-containing CHA-type catalyst, wherein the zeolite contains 2 to 7 wt.-% copper oxide, 0.1 to 0.4 wt.-% alkali cations, and has a BET surface area of 320 to 750 m²/g.

Zeolites are microporous aluminosilicate materials which have very regular pore structures of molecular dimensions and which occur in numerous framework structures. They are classified by the Structure Commission of the International Zeolite Association which defines respective framework types. The commission also assigns framework type codes consisting of three capital letters to all unique and confirmed framework topologies. For example, a widely used group of zeolites belongs to the faujasite framework to which the code FAU has been assigned.

It is also common to classify zeolites according to their pore size which is defined by the ring size of the biggest pore aperture. Zeolites with a large pore size have a maximum ring size of 12 tetrahedral atoms, zeolites with a medium pore size have a maximum pore size of 10 and zeolites with a small pore size have a maximum pore size of 8 tetrahedral atoms. Well-known small-pore zeolites belong in particular to the AEI, CHA (chabazite), ERI (erionite), LEV (levyne) and KFI framework types. Examples having a large pore size are zeolites of the faujasite framework type.

Small-pore zeolites, in particular if cations like copper and iron are included in the zeolite pores, play an important role as catalysts in the so-called Selective Catalytic Reduction (SCR) of nitrogen oxides with ammonia to form nitrogen and water. The SCR process has been widely used to clean up exhaust gases which result from the combustion of fossil fuels, in particular from stationary power plants and from vehicles powered by diesel engines.

The catalytic reduction of NOₓ with NH₃ can be represented by different reaction equations. Nitric oxide (NO) is the main NOₓ compound produced in an engine. The reduction of NO is referred to as the "standard" NH₃-SCR reaction:

4NO + 4NH₃ + O₂ → 4N₂ + 6H₂0 (1)

NO₂ is more reactive than NO. In presence of mixtures of NO and NO₂, the NH₃-SCR reaction is easier, and the so-called "fast" NH₃-SCR reaction can occur:

2NH₃ + NO + NO₂ → 2N₂ + 3H₂O (2)

To take profit of the fast NH₃-SCR reaction, an additional catalyst is needed to oxidize part of the NO into NO₂.

Also, side reactions may occur and result in unwanted products or the unproductive consumption of ammonia:

2NH₃ + 2O₂ → N₂O + 3H₂O (3)

4NH₃ + 3O₂ → N₂ + 6H₂O (4)

4NH₃ + 5O₂ → 4NO + 6H₂O (5)

2NH₃ + 2NO₂ +H₂O → NH₄NO₂ + NH₄NO₃ (6)

In official driving cycles, exhaust gas temperatures of latest generation engines and hybrid vehicles with reduced fuel consumption and low CO₂ emission are significantly lower than with previous engine generations. Therefore, it is necessary to obtain a NH₃-SCR catalyst which has a high low-temperature NOₓ conversion capacity. In general, Cu-containing zeolites display a better low-temperature NOₓ conversion then their Fe-containing counterparts.

Next to selectivity and activity, the hydrothermal stability of SCR catalysts is another essential parameter, as an NH₃-SCR catalyst has to withstand harsh temperature conditions under full load of the engine and the exposure to water vapor at temperatures up to 700 °C is known to be critical for many zeolite types.

While zeolites occur in nature, zeolites intended for use as SCR catalyst or other industrial applications are usually manufactured via synthetic processes.

Many processes are described which start from a source of aluminum and a source of silicon and use a structure directing agent as a template for the structure type to be synthesized. Processes of this type are for example disclosed in WO 2011/064186 A1 and WO2011/157839 A1. The products thus obtained usually contain sodium or quaternary ammonium cations which normally need to be replaced with copper and/or iron cations. This can be done by an additional synthesis step as for example described in WO 2011/073390 A2 and WO 2011/073398 A2.

WO 2011/073398 A2 discloses processes for the preparation of copper-containing molecular sieves with the CHA structure, wherein the copper is exchanged into the Na⁺ form of the Chabazite, using a liquid copper solution wherein the concentration of copper is in the range of about 0.001 to about 0.4 molar. Also described are copper-containing molecular sieves with the CHA structure, catalysts incorporating molecular sieves, systems and methods for their use. The CHA zeolite contains 2 to 5 wt.-%, 2 to 4 wt.-%, 2.5 to 3.5 wt.-%, and 2.75 to 3.75 wt.-% of copper, calculated as CuO; containing sodium metal cations in a total amount of 0.1, 0.2 and 0.25 wt.-%; and having a BET surface area of from 600 to 750 m²/g. The SAR values is between 15 and 20; the copper to aluminum atomic ratio is in the ranges of between 0.25 to 0.5 and 0.3 to 0.4; and the crystallite size ranges from 50 to 500 nm.

WO 2011/073390 A2 discloses processes for the preparation of copper-containing molecular sieves with the CHA structure having a silica to alumina mole ratio greater than about 10, wherein the copper exchange step is conducted via wet state exchanged and prior to the coating step, and wherein in the copper exchange step a liquid copper solution is used wherein the concentration of copper is in the range of about 0.001 to about 0.25 molar using copper acetate and/or an ammoniacal solution of copper ions as copper source. Catalysts made by the processes, catalyst systems and methods of treating exhaust gas with the molecular sieves and catalysts are also disclosed. The molecular sieve with the CHA structure has a copper content, calculated as CuO, ranging from about 2 to about 5 wt.-%. The silica to alumina ratio is preferably greater than about 15, more specifically in the range from about 25 to about 40. The sodium content is below 2 wt.-%, specifically below 1 wt.-%,even more specifically below 2000 ppm, 1000 ppm, 500 ppm, and most specifically below 100 ppm. The copper-containing molecular sieve with the CHA structure exhibits a BET surface area in the range from about 400 to about 750 m²/g.

Chem. Lett., 2014, 43, 302 (Maruo et al.) describe the facile synthesis of high-silica AEI zeolites from FAU zeolites using tetraethylphosphonium hydroxide (TEPOH) as template. This process, however, has the disadvantage that the Si/AI ratio range of the obtained AEI zeolites is very narrow (13-14) and monomeric and condensed phosphate species are formed in the zeolitic pores during the conventional calcination process. The formation of several types of phosphate species results in the blocking of zeolitic pores.

J.Mater.Chem. A, 2015, 3, 857 (Sonoda et al.) describe the hydrothermal conversion of a FAU zeolite into an AEI zeolite using TEPOH as structure directing agent and seed crystals. The conversion was conducted at 150 °C for 7 days. The paper further describes the manufacture of the respective copper-loaded zeolite by a usual impregnation method using copper nitrate.

US 4,544,538 describes the hydrothermal synthesis of small-pore zeolite SSZ-13 with CHA framework type using a source of aluminum and silicon, an alkali hydroxide and an organic structure directing agent, for example N,N,N-trimethyl-1-adamantammonium iodide, N-methyl-3-quinuclidinol iodide or N,N,N-trimethyl-2-ammonium exonorborane. Copper introduction needs to be performed by an additional unit operation such as ion exchange, impregnation and the like. A disadvantage of this approach is the need of expensive templates and an additional processing step for the copper loading.

Also one-pot processes are already known. WO2009/141324 discloses a process for the preparation of a copper containing zeolitic material having CHA framework structure which comprises using a source of aluminum, a source of silicon and a source of copper. Also this process needs a structure directing agent as a template for the CHA framework structure, for example 1- adamantyltrimethylammonium hydroxide and benzyltrimethylammonium hydroxide. This one-pot process for the manufacture of copper containing aluminosilicate zeolites has disadvantages. For example, it involves organic templates as structure directing agents which are usually very expensive.

A one-pot synthesis of copper containing CHA zeolite is also described in WO 2015/084817 A1, WO 2015/084930 A1 and US 2015/0151286 A1. A mixed-template approach is combined with a silica source, alumina source and optional seed crystals of the envisaged zeolite framework. The mixed-template comprises a metal-amine complex, preferably copper tetraethylenepentamine (Cu-TEPA), and a second organic structure direct agent suitable for forming the envisaged zeolite framework, such as N,N,Ndimethylethylcyclohexylammonium, N,N,N- methyldiethylcyclohexyl-ammonium, N,N,N-triethylcyclohexylammonium, benzyltrimethyl-ammonium, tetramethylammonium, 1 -adamantyltrimethlylammonium and N,N,N-triethylcyclohexylammonium cations, in the case CHA zeolite framework is preferred.

Another one-pot synthesis of Cu containing CHA zeolite using a mixed-template of Cu-TEPA and tetraethylammonium hydroxide, a commercial Y zeolite (CBV-720) as silicon and aluminum source, and sodium hydroxide is decribed in N Martin, M Moliner and A Corma: "High yield synthesis of high-silica chabazite by combining the role of zeolite precursors and tetraethylammonium: SCR of NOx", Chem Commun 2015, 51, 9965-9968. The final gel had the following molar ratios: 1 SiO₂ / 0.047 Al₂O₃ / 0.05 Cu-TEPA / 0.4 TEAOH /0.1 NaOH /5H₂O. Similar, the disadvantage is the use of organic templates which are usually very expensive.

L Ren, L Zhu, C Yang, Y Chen, Q Sun, H Zhang, C Li, F Nawaz, X Meng and F-S Xiao: "Designed copper-amine complex as an efficient template for one-pot synthesis of Cu-SSZ-13 zeolite with excellent activity for selective catalytic reduction of NOx by NH3", Chem Commun 2011, 47, 9789-9791, describes a one-pot synthesis for a zeolite with the CHA framework type code from a synthesis mixture containing silica sol, sodiumaluminate, sodium hydroxide and a copper complex of CuSO₄*5H₂0 with tetraethylenepentamine (Cu-TEPA) in a molar oxide ratio of 3.1 - 3.8 Na₂O; 1 Al₂O₃; 200 H₂0; 10-35 SiO₂; 2 - 3 Cu-TEPA. The preparation requires a hydrothermal synthesis of 96 h at 140 °C. The resulting materials have a Si/AI of 4.05 - 7.65 and a high CuO loading of 11.89 - 12.77 wt.%.

L Xie, F Liu, L Ren, X Shi, F-S Xiao and H He: "Excellent Performance of One-Pot Synthesized Cu-SSZ-13 Catalyst for the Selective Catalytic Reduction of NOx with NH3", Environ Sci Technol 2014, 48, 566-572, describes an adjusted synthesis recipe from a synthesis mixture with a molar oxide ratio of 4.93 Na₂O; 1 Al₂O₃; 200 H₂O; 10 SiO₂; 1.33 Cu-TEPA and a hydrothermal treatment of 96 h at 140 °C. The resulting material has a Si/AI ratio of 4.15 and a CuO and Na₂O content of 12.89 wt.% and 12.41 wt.%, respectively. Ion exchange of the as made zeolite with 1 M NH₄NO₃ decreases the CuO and Na₂O content to 3.8 and 1.2 wt.%, respectively.

There is literature describing the role of alkali cations in the formation of zeolites. For example, the Li⁺(H₂0) complex is already known to act as template for the formation of the ABW framework type (Phys. Chem. Chem. Phys. 12 (2012) 14579-14584). A direct synthesis of Li containing ABW is described in Stud. Surf. Sci. Catal., ed. A. Gédéon, P. Massiani and F. Babonneau, Elsevier, 2008, vol. 174, part A, pp. 185-188. Also the transformation to analcime (ANA framework type) in the presence of CsOH has been repeatedly described in literature (J. Phys. Chem. B 114 (2010) 5747-5754).

US 2011/0165051 A1 discloses processes for the preparation of copper containing molecular sieves with the CHA structure wherein the copper is exchanged into the Na⁺-form of the Chabazite, using a liquid copper solution wherein the concentration of copper is in the range of about 0.0001 to about 0.4 molar. The method for preparing the molecular sieves with the CHA structure uses adamantyltrimethylammonium hydroxide as the structure directing agent. The process includes a copper exchange step wherein a zeolite is dispersed in a copper solution. The method provided does not allow for an independent adjustment of the copper and the sodium contents, respectively, because sodium cations replace copper cations. The embodiments presented can be modified so that the sodium content is less than about 2500 ppm, corresponding to 0.25 wt.-%. However, sodium contents range from 0.25 to 2 wt.-%.

A very similar approach to manufacture copper containing molecular sieves with a CHA structure is disclosed in US 2011/0165052 A1. In this application, the molecular sieve with the CAH structure may be provided in the form of a powder or a sprayed material. Subsequently, the powder or sprayed material is admixed with or coated by suitable modifiers such as silica, alumina, zeolites or refractory binders. As in US 2011/0165051 A1, the copper is exchanged into the Na⁺-form of the Chabazite, using a liquid copper solution, but in US 2011/0165052 A1, the concentration of copper is in the range of about 0.0001 to about 0.25 molar.

The processes for the manufacture of copper containing aluminosilicate zeolites described above have disadvantages. For example, they involve several process steps including crystallization of the final product at about 150 °C and high pressure which results in a high energy consumption and an ion exchange step to remove the excessive copper content. They do not allow for adjusting the copper and sodium or alkali metal independently from one another. Furthermore, the selectivity, activity and hydrothermal stability of many Cu-containing small-pore zeolites known so far is not sufficient for long-term applications in automotive combustion exhaust purification systems.

### Problem to be solved by the invention

It is therefore an object of the present invention to provide Cu-containing small-pore zeolites having improved selectivity, activity and hydrothermal stability compared to small-pore zeolites known so far, to provide a simple, cost-effective process for making said zeolites, and a method for using said zeolites as SCR catalysts.

### Solution of the problem

The inventors of the present invention have now surprisingly found crystalline copper-containing small-pore aluminosilicate zeolites having a maximum pore size of eight tetrahedral atoms, wherein the zeolite is CHA, containing 2 to 7 wt.-% copper, calculated as CuO and based on the total weight of the respective zeolite, and containing alkali metal cations in a total amount of 0.1 to 0.4 wt.-%, calculated as pure metals and based on the total weight of the zeolite, wherein the alkali metals are selected from sodium, potassium and mixtures of sodium and potassium, and having a SAR of 7 to 9, and having a BET surface area of from 600 to 750 m²/g. They are excellent NH₃-SCR catalysts in terms of activity, N₂ selectivity and hydrothermal stability, and they show a very good low-temperature activity while maintaining a high activity in a broad temperature range, even after hydrothermal aging. A low N₂O formation is typical for copper-containing small-pore zeolites according to the invention.

The novel copper-containing zeolites according to the present invention, the process for making them and the method for using them as SCR catalysts are explained below, with the invention encompassing all the embodiments indicated below, both individually and in combination with one another.

A crystal structure is a description of the ordered arrangement of atoms, ions, or molecules in a crystalline material. Ordered structures occur from the intrinsic nature of the constituent particles to form symmetric patterns that repeat along the principal directions of three-dimensional space in matter. A "crystal" therefore represents a solid material whose constituents are arranged in a crystal structure.
A "crystalline substance" is composed of crystals.
A "zeolite framework type", also referred to as "framework type", represents the corner-sharing network of tetrahedrally coordinated atoms.
For instance, a "CHA framework type material" is a zeolitic material having a CHA framework type.

The crystalline copper-containing small-pore aluminosilicate zeolites according to the present invention having a maximum pore size of eight tetrahedral atoms, wherein the zeolite is CHA, containing 2 to 7 wt.-% copper, calculated as CuO and based on the total weight of the respective zeolite, and containing alkali metal cations in a total amount of 0.1 to 0.4 wt.-%, calculated as pure metals and based on the total weight of the zeolite, wherein the alkali metals are selected from sodium, potassium and mixtures of sodium and potassium, and having a SAR of 7 to 9, and having a BET surface area of from 600to 750 m²/g are hereinafter referred to as "the zeolites" or "the zeolites according to the present invention".

The silica to alumina ratio ranges from 7 to 9. Hereinafter, the silica to alumina molar ratio is abbreviated as SAR.

The zeolites according to the present invention comprise copper in an amount of 2 to 7 wt.-%, preferably 3 to 6 wt.-%, even more preferably 3 to 5 wt.-%, calculated as CuO and based on the total weight of the respective zeolite.

In one embodiment of the present invention, the copper to aluminum atomic ratio of the zeolites is in the range of between 0.003 to 0.6, preferably 0.05 to 0.5, particularly preferably 0.1 to 0.5.

The zeolites according to the present invention contain alkali metal cations in a total amount of 0.1 to 0.4 wt.-%, calculated as pure metals and based on the total weight of the zeolite. The zeolite is CHA and the alkali metal is sodium, potassium, or a mixture of sodium and potassium.

In one embodiment of the present invention, the crystallite size of the zeolites according to the invention measured by SEM (scanning electron microscopy) is between 10 nm to 5000 nm, preferably 20 nm to 2000 nm, even more preferably between 50 nm and 1000 nm, and most preferably between 50 nm and 500 nm.

The BET surface area can be measured according to ISO 9277.
The zeolite is CHA, and its BET surface area is between 600 and 750 m²/g.
The zeolite is CHA, has a copper content of from 2 to 7 wt.-%, calculated as CuO and based on the total weight of the zeolite, and a content of alkali metal cations in a total amount of 0.1 to 0.4 wt.-%, calculated as pure metals and based on the total weight of the zeolite, wherein the alkali metals are selected from sodium, potassium and mixtures of sodium and potassium, a SAR of 7 to 9, and a BET surface area of from 600 to 750 m²/g.

The copper-containing small-pore zeolites according to the present invention can be used for the preparation of SCR catalysts. Furthermore, they are suitable ion exchangers. They can also be used as molecular sieves and as catalysts in a large variety of reactions. Well-known uses of zeolites include, for instance, fluid catalytic cracking, hydrocracking, hydrocarbon conversion reactions, reprocessing methods and heat accumulation.

The object to provide a simple, cost-effective process for making the crystalline, copper-containing small-pore aluminosilicate zeolites according to the present invention is solved as described hereinafter. This method and its embodiments are easy to perform while having a reduced energy consumption, yielding the zeolites according to the present invention as described above with the desired CuO content between 2 and 7 wt.-%, the content of alkali metal cations of 0.1 to 0.4 wt.-% and the BET surface area of between 600 and 750 m²/g and go without use of expensive templates. In addition, it is desirable to provide a process which is flexible in the sense that it allows to manufacture a wide variety of small-pore zeolites with respect to copper content, Si to Al atomic ratio and SAR, respectively, and framework type.

Hereinafter, the terms "method" and "process" are used interchangeably.

The inventors of the present invention have now found that it is surprisingly possible to transform zeolites of the faujasite framework type under alkaline conditions in the presence of a copper complex with tetraethylenepentamine (TEPA) to copper containing small-pore zeolites.

The object to provide a process for the manufacture of a crystalline, copper-containing small-pore aluminosilicate zeolite having a maximum pore size of eight tetrahedral atoms, wherein the zeolite is CHA, containing 2 to 7 wt.-% copper, calculated as CuO and based on the total weight of the respective zeolite, and containing alkali metal cations in an amount of from 0.1 to 0.4 wt.-%, wherein the alkali metals are selected from sodium, potassium and mixtures of sodium and potassium, calculated as pure metals and based on the total weight of the zeolite, having a SAR of 7 to 9 and having a BET surface area of from 600 to 750 m²/g which comprises
- preparing an aqueous reaction mixture comprising a zeolite of the faujasite framework type, Cu-tetraethylenepentamine (Cu-TEPA) and at least one compound M(OH)ₓ, wherein M(OH)ₓ is NaOH and/or KOH, and
- heating the reaction mixture to form a copper containing small-pore zeolite
- calcining the copper containing small-pore zeolite, followed by adjusting the copper and alkali metal content of said zeolite via ion exchange
   or
- adjusting the copper and alkali metal content of the copper containing small-pore zeolite via ion exchange, followed by calcining said zeolite.

It is obvious for the skilled person that "reaction mixture" refers to an aqueous mixture.

In embodiments of the present invention the reaction mixture does not comprise the tetraethylammonium, tetramethylammonium, N,N,N-dimethylethyl-cyclohexylammonium, N,N,N- methyldiethylcyclohexyl-ammonium, N,N,N-triethylcyclohexylammonium, benzyltrimethyl-ammonium, 1-adamantyl-trimethlylammonium, N,N,N-triethylcyclo-hexylammonium and the N,N-dimethyl-3,5-dimethylpiperidinium cations.

Further embodiments of the present invention refer to a process for the manufacture of a crystalline, copper-containing small-pore aluminosilicate zeolite according to the present invention which comprises
- preparing an aqueous reaction mixture consisting of a zeolite of the faujasite framework type, Cu-tetraethylenepentamine (Cu-TEPA) and at least one compound M(OH)x, wherein M(OH)ₓ is NaOH and/or KOH, and
- which does not comprise the tetraethylammonium cation and
- heating the reaction mixture to form a copper containing small-pore zeolite
- calcining the copper containing small-pore zeolite, followed by adjusting the copper and alkali metal content of said zeolite via ion exchange
   or
- adjusting the copper and alkali metal content of the copper containing small-pore zeolite via ion exchange, followed by calcining said zeolite.

In embodiments of the inventive process, the heating is performed at temperatures of 80 to 150 °C, in particular 90 to 98 °C, for 2 to 31 days. Optionally, the reaction mixture is left statical, i.e. it stands without stirring, during the heating step.

After the heating step, the copper containing small-pore zeolite is calcined, and the copper and alkali metal content of the copper containing small-pore aluminosilicate zeolites is further adjusted via ion exchange techniques. Such techniques are well known to the skilled artisan.

"Adjusting the copper and alkali metal content of the copper containing small-pore zeolite" means that
- the copper content is adjusted to 2 to 7 wt.-% of copper, calculated as CuO and based on the total weight of the zeolite and
- the alkali metal cations are adjusted to an amount of 0.1 to 0.4 wt.-%, calculated as pure metals and based on the total weight of the zeolite.

Suitably, an ammonium exchange is performed in order to remove part of the alkali metal or copper cations from the zeolite framework by replacing them with NH₄⁺ cations. The copper and alkali metal content of the resulting crystalline copper-containing small-pore aluminosilicate zeolites can be easily controlled via the amount of ammonium cations and the number of ion exchange procedures performed.

Methods for introducing ammonium are well known to the skilled artisan. They can be applied to the zeolites which are obtained following the process of the present invention without departing from the scope of the claims.

For instance, an NH₄⁺ liquid ion exchange can be performed at 100 °C in an aqueous suspension under reflux conditions. 100 ml of a 0.5 M aqueous NH₄Cl or NH₄NO₃ solution is used per 1 g of the zeolite.

The calcining step is carried out for 1 to 5 hours at temperatures of between 500°C and 650°C. Preferable, the calcination is carried out for 2 hours at about 600°C.

In all embodiments of the process according to the present invention, it is possible to perform the calcining step first and then to carry out the adjustment of the copper and alkali metal contents via ion exchange, or vice versa.

The skilled artisan knows that ammonium cations decompose upon heating: ammonia (NH₃) escapes, and a proton (H⁺) remains at the site where NH₄⁺ has formerly been. If the copper containing zeolite is first ion exchanged and then calcined, metal cations (copper and/or alkali cations) will first be replaced by NH₄⁺ and then by H⁺ due to the thermal decomposition of NH₄⁺.

The copper containing small-pore zeolites may be used in SCR catalysis. If the copper containing zeolite is first calcined and then ion exchanged according to the processed described above, NH₄⁺ cations will decompose in the same manner as described above for the calcination, but during hydrothermal aging of the SCR catalyst.

Thus, the ammonium ion exchange eventually results in a replacement of some of the copper and/or alkali metal cations by protons, irrespective of whether the ion exchange is carried out first, followed by calcination or vice versa.

In embodiments of the present invention tetraethylenepentamine is the only structure directing agent in the reaction mixture. The skilled persons knows that structure directing agents (SDAs), also called "structure directing templates", are organic molecules comprising relatively hydrophobic, bulky and rigid organic cations. Said SDAs determine the structure of the respective zeolite which is formed during SiO₂ crystallization.

Zeolites of the faujasite framework type are known and commercially available in a large variety under the name zeolite Y. In particular, a large amount of faujasites with different Si/AI ratios is available which allows easy control of the Si/AI ratio of the resulting copper containing small-pore zeolite.
In embodiments of the inventive process the zeolite of the faujasite framework type has a Si/AI ratio in the range from 5 to 30.

Likewise the copper content of the resulting copper containing small-pore zeolite can be easily controlled via the amount of copper complex used in the inventive process.
In embodiments of the inventive process the copper content of the copper containing small-pore zeolite is 2 to 7 wt.-%, in particular 3 to 6 wt.-% and particularly preferably 3 to 5 wt.%, calculated as CuO and based on the total weight of the copper containing small-pore zeolite.

The copper complexing agent TEPA used in the inventive process is known and commercially available. The Cu-TEPA can be manufactured in line with known processes, see for example the procedure described under "Embodiments" below.

In embodiments of the inventive process the copper complex is used in an amount of 0.0001 mole/wt Cu-TEPA/FAU zeolite to 0.0016 mole/wt Cu-TEPA/FAU zeolite.

The compound M(OH)ₓ is NaOH and/or KOH and the copper containing small-pore zeolite obtained is of the CHA framework type.

In embodiments of the inventive process M(OH)ₓ is used in an amount of 0.001 mole/wt M(OH)ₓ/FAU zeolite to 0.025 mole/wt M(OH)ₓ/FAU zeolite.

In embodiments of the inventive process forming and crystallization of the resulting copper containing small-pore zeolite is supported by the addition of seed crystals of the respective framework type.

Exhaust emissions of vehicles driven by a predominantly lean combustion engine contain, next to particle emission, in particular the primary emissions carbon monoxide CO, hydrocarbons HC, and nitrogen oxides NOₓ. Due to the relatively high oxygen content of up to 15 vol.%, carbon monoxide and hydrocarbons can be rendered harmless by oxidation fairly easy, but the reduction of the nitrogen oxides to nitrogen is much more difficult to achieve.

An SCR catalyst containing a zeolite according to the present invention may be manufactured by well-known methods.

The SCR catalysts may, for instance, be obtained by solid state sublimation. For this purpose, a dry, intimate mixture of the zeolite and a copper salt as described above under "solid state ion exchange" is made. Said mixture is then heated to a temperature of 550 to 900°C, whereby the copper salt decomposes into the metal (i.e. copper) or the copper ion. Subsequently, the mixture is heated at a temperature and for a time span sufficient to achieve the solid state sublimation of copper into the CHA framework type material.

The powder thus obtained is then dispersed in water and mixed with a binder. Suitable binders are, for example, boehmite and silica gel. Afterwards, this mixture comprising water, a binder, and the zeolite only needs to be stirred or homogenized, respectively, and may be applied directly as a coating suspension to coat a carrier substrate. The coating suspension is hereinafter referred to as the "washcoat".

In some embodiments of the SCR catalysts according to the present invention, said SCR catalyst is present in the form of a coating on a carrier substrate. Carrier substrates can be so-called flow-through substrates or wall-flow filters, respectively.

Both carrier substrate may consist of inert materials, such as silicon carbide, aluminium titanate, cordierite or metal. Such carrier substrates are well-known to the skilled person and available on the market.

In other embodiments, the carrier substrates may be catalytically active on their own, and they may comprise catalytically active material, e.g. SCR-catalytically active material. SCR-catalytically active materials which are suitable for this purpose are basically all materials known to the skilled person, for example catalytically active materials based on mixed oxides, or catalytically active materials based on ion-exchanged zeolitic compounds. For instance, iron- and copper-exchanged zeolitic compounds are well known catalytically active materials. Furthermore, mixed oxides comprising compounds of vanadium, titanium and tungsten are particularly suitable for this purpose.

In addition to the catalytically active material, these carrier substrates comprise a matrix component. All inert materials which are otherwise used for the manufacturing of catalyst substrates may be used as matrix components in this context. It deals, for instance, with silicates, oxides, nitrides or carbides, with magnesium aluminium silicates being particularly preferred.

In other embodiments of the SCR catalysts according to the present invention, the catalyst itself forms part of the carrier substrate, for example as part of a flow-through substrate or a wall-flow filter. Such carrier substrates additionally comprise the matrix components described above.

Carrier substrates comprising the SCR catalysts according to the present invention may be used as such in exhaust purification. Alternatively, they may be coated with catalytically active materials, for example with SCR-catalytically active materials. Insofar as these materials shall exhibit an SCR catalytic activity, the SCR catalysts mentioned above are suitable materials.

In one embodiment, catalytically active carrier materials are manufactured by mixing 10 to 95 wt.-% of an inert matrix component and 5 to 90 wt.-% of a catalytically active material, followed by extruding the mixture according to well-known protocols. As already described above, inert materials that are usually used for the manufacture of catalyst substrates may be used as the matrix components in this embodiment. Suitable inert matrix materials are, for example, silicates, oxides, nitrides and carbides, with magnesium aluminium silicates being particularly preferred.

The application of the catalytically active catalyst onto either the inert carrier substrate or onto a carrier substrate which is catalytically active on its own as well as the application of a catalytically active coating onto a carrier substrate, said carrier substrate comprising a catalyst according to the present invention, can be carried out following manufacturing processes well known to the person skilled in the art, for instance by widely used dip coating, pump coating and suction coating, followed by subsequent thermal post-treatment (calcination).

The skilled person knows that in the case of wall-flow filters, their average pore sizes and the mean particle size of the catalysts according to the present invention may be adjusted to one another in a manner that the coating thus obtained is located onto the porous walls which form the channels of the wall-flow filter (on-wall coating). However, the average pore sizes and the mean particle sizes are preferably adjusted to one another in a manner that the catalyst according to the present invention is located within the porous walls which form the channels of the wall-flow filter. In this preferable embodiment, the inner surfaces of the pores are coated (in-wall coating). In this case, the mean particle size of the catalysts according to the present invention has to be sufficiently small to be able to penetrate the pores of the wall-flow filter.

The catalysts according to the present invention may advantageously be used for the exhaust purification of lean combustion engines, in particular for diesel engines. They convert nitrogen oxides comprised in the exhaust gas into the harmless compounds nitrogen and water.

Commonly known exhaust gas purification systems are often formed by arranging an oxidation catalyst (DOC) having an oxidative function for nitrogen monoxide and hydrocarbon and aforementioned selective catalytic reduction type catalyst (SCR) having an oxidative function layer in the subsequent stage thereof, in a flow path of exhaust gas, characterized in that a spraying means to supply an urea aqueous solution or an aqueous ammonia solution is arranged in the downstream of the aforementioned oxidation catalyst and in the upstream of aforementioned selective catalytic reduction type catalyst. Furthermore, a diesel particulate filter (DPF) for filtering out soot is often combined with the DOC and the SCR. In these arrangements, combustible particle components are deposited on the DPF and combusted therein. Such arrangements are, for instance, disclosed in EP 1 992 409 A1. Widely used arrangements of such catalysts are, for example (from upstream to downstream):

(1) DOC + (NH₃) + SCR

(2) DOC + DPF + (NH₃) + SCR

(3) DOC + (NH₃) + SCR + DPF

(4) DOC + (NH₃) + SCR + DOC + DPF.

In the above examples (1) to (4), (NH₃) represents a position where an urea aqueous solution, an aqueous ammonia solution, ammonium carbamate, ammonium formiate or the like is supplied as a reducing agent by spraying. The supply of such urea or ammonia compounds in automotive exhaust gas purification systems is well known in the art.

Hence, the present invention furthermore refers to a method for the purification of exhaust gases of lean combustion engines, characterized in that the exhaust gas is passed over a catalyst according to the present invention.

In a preferred embodiment of the process according to the present invention, ammonia is used as the reducing agent. The ammonia required may, for instance, be formed within the exhaust purification system upstream to a particulate filter by means of an upstream nitrogen oxide storage catalyst ("lean NOx trap" - LNT). This method is known as "passive SCR".

Alternatively, ammonia may be supplied in an appropriate form, for instance in the form of urea, ammonium carbamate or ammonium formiate, and added to the exhaust gas stream as needed. A widespread method is to carry along an aqueous urea solution and to and to dose it into the catalyst according to the present invention via an upstream injector as required.

The present invention thus also refers to a system for the purification of exhaust gases emitted from lean combustion engines, characterized in that it comprises a catalyst according to the present invention, preferably in the form of a coating on a carrier substrate or as a component of a carrier substrate, and an injector for aqueous urea solutions, wherein the injector is located upstream of the catalyst of the present invention.

For example, it is known from SAE-2001-01-3625 that the SCR reaction with ammonia proceeds more rapidly if the nitrogen oxides are present in an 1:1 mixture of nitrogen monoxide and nitrogen dioxide, or if the ratios of both nitrogen oxides are close to 1:1. As the exhaust gas from lean combustion engines generally exhibits an excess of nitrogen monoxide over nitrogen dioxide, this SAE paper suggests to increase the amount of nitrogen dioxide by means of an oxidation catalyst. The exhaust gas purification process according to the present invention may not only be applied in the standard SCR reaction, i.e. in the absence of nitrogen dioxide, but also in the rapid SCR reaction, i.e. when part of the nitrogen monoxide has been oxidized to nitrogen dioxide, thus ideally providing a 1:1 mixture of nitrogen monoxide and nitrogen dioxide.

The present invention therefore also relates to a system for the purification of exhaust gases from lean combustion engines, characterized in that it comprises an oxidation catalyst, an injector for aqueous urea solutions and a catalyst according to the present invention, preferably in the form of a coating on a carrier substrate or as a component of a carrier substrate.

In a preferred embodiment of the exhaust gas purification system according to the present invention, platinum supported on a carrier support material is used as an oxidation catalyst.

Any carrier material for platinum which is known to the skilled person as suitable material may be used without departing from the scope of the claims. Said materials show a BET surface area of 30 to 250 m²/g, preferably 100 to 200 m²/g (measured according to DIN 66132). Preferred carrier substrate materials are alumina, silica, magnesium dioxide, titania, zirconia, ceria and mixtures and mixed oxides comprising at least two of these oxides. Particularly preferred materials are alumina and alumina/silica mixed oxides. If alumina is used, it is preferably stabilized, for instance with lanthanum oxide.

The exhaust gas purification system is arranged in an order wherein, in flow direction of the exhaust gas purification system, an oxidation catalyst is arranged first, followed by an injector for an aqueous urea solution, and finally a catalyst according to the present invention.

### Brief description of the Drawings

Fig. 1 shows a comparison of the NOₓ conversion of two Cu-SCR catalysts in the fresh state. The solid line represents the Cu-SCR catalyst according to the present invention, and the dashed resp. broken line shows the comparative example.
Fig. 2 shows a comparison of the NOₓ conversion of two Cu-SCR catalysts in the aged state. The solid line represents the Cu-SCR catalyst according to the present invention, and the dashed resp. broken line shows the comparative example.
Fig. 3 shows the crystal size and morphology of a Cu-CHA that was synthesized according to the process disclosed in the present invention prior to ion exchange.

### Embodiments

### Synthesis of Cu-TEPA

Synthesis of Cu-Tetraethylenepentamine complex (Cu-TEPA): 37.9 g tetraethylenepentamine (0.2 mole) was added under stirring to a solution consisting of 50 g CuSO₄*5H₂O (0.2 mole) in 200 g of H₂O (1 M solution) and left to stir for 2 h at room temperature.

### Synthesis of Cu-CHA according to the present invention

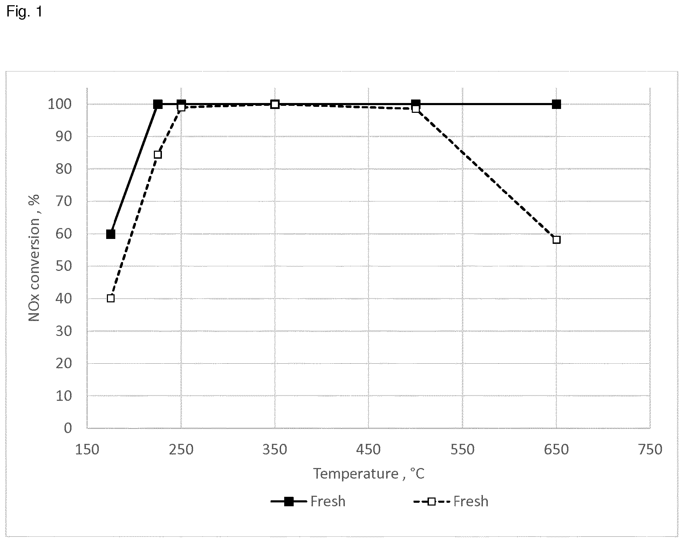

3 g of zeolite Y with SAR = 30 (Si/AI = 15) (CBV720 supplied by Zeolyst International) was suspended in 27 mL of a 1.2 M solution of sodium hydroxide. To this solution 1.5 mL of a 1 M Cu-TEPA solution was added. The final gel had the following molar ratios: 1 SiO₂ / 0.033 Al₂O₃ / 0.033 Cu-TEPA / 0.70 NaOH / 34 H₂O. The suspension was stirred for 10 minutes at room temperature, before being transferred to an oven at 95 °C and left statically for 7 days. After cooling to room temperature, the powder was separated from the mother liquor by filtration, washed with demineralized water and dried at 60 °C for 12 h. The zeolite produced was determined to have the CHA framework type code according to X-ray diffraction (see figure 1) with a Si/AI ratio of 4.3 and a CuO content of 7.5 wt.%.

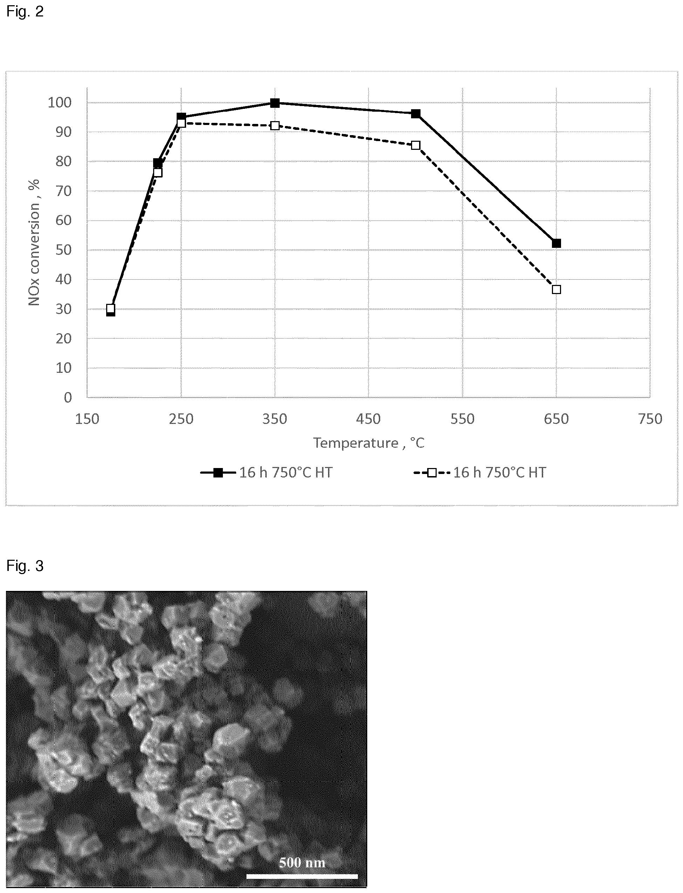

Figure 3 shows the morphology and crystal size of the product obtained.

### Ion exchange and coating onto cordierite substrates

The Cu-CHA obtained above was subjected to NH₄⁺ ion exchange: until the Cu content was 4.0 wt.-% in copper content, calculated as CuO, and the Na content was in the range of 0.1 to 0.4 wt.-%, calculated as pure metal, wherein both ranges were based on the total weight of the zeolite.

The catalyst formulation of the Cu-SCR catalyst according to the invention was based on a CHA-zeolite material with a CuO-loading of 4.0 wt.% from the synthesis, with an SAR of about 8.6. The sodium content was 1500 ppm or 0.15 wt.-%, respectively, and the BET surface area of the zeolite material was ∼ 680 m²/g.

The comparative example Cu-zeolite catalyst was based on a CHA-zeolite material with an SAR of 28 and a CuO-loading of 4.0 wt.%. The sodium content was < 200 ppm or < 0.02 wt.-%, respectively, and the BET surface are of the zeolite material was ∼ 720 m²/g.

The resulting Cu-zeolite materials were coated onto ceramic cordierite substrates with a cell density of 400 cpsi (cells per square inch) and a wall thickness of 6.5 mil. To improve the adhesion properties of the ion exchanged zeolites a binder was used in an amount of 12 wt.%, resulting in an overall washcoat loading amount of 150 g/L coated catalyst volume.

After washcoating the corresponding Cu-zeolite based SCR catalysts were dried and finally calcined for 2 hours at 600°C in air.

### Catalyst ageing / hydrothermal treatment

From the Cu-zeolite catalyst samples 1 inch diameter cores with a total length of 3 inch were drilled out for testing in fresh and aged state.

Ageing conditions of choice were 16 hours at 750°C using a forced flow-through of hydrothermal atmosphere containing 10 vol.% of oxygen, 10 vol.% of water vapor balanced by nitrogen.

### Performance / SCR activity evaluation:

SCR activity testing of the drilled cores of 1 inch diameter and 3 inch length was carried out in a feed gas mixture containing 500 ppm nitrogen monoxide (NO), 750 ppm ammonia (NH₃), 5 vol.% water vapor (H₂O), 10 vol.% oxygen (O₂), 10 vol.% carbon dioxide (CO₂) and nitrogen balance. The space velocity was 60.000 h-1.

Reaction temperatures evaluated were in the range of 175 to 650°C. Tests were carried out in fresh state as well as in the above described aged state. NOx concentration and N₂O concentrations were measured after observation of stable product composition downstream the catalyst samples. The product gas stream components were evaluated by a FTIR-spectrometer.

The results of the NOₓ conversion in the fresh state are shown in Fig. 1.

The results of the NOₓ conversion in the aged state are shown in Fig. 2

## Claims

1. Crystalline copper-containing small-pore aluminosilicate zeolites having a maximum pore size of eight tetrahedral atoms, wherein the zeolite is CHA, has a copper content of from 2 to 7 wt.-%, calculated as CuO and based on the total weight of the zeolite, and a content of alkali metal cations in a total amount of 0.1 to 0.4 wt.-%, calculated as pure metals and based on the total weight of the zeolite, wherein the alkali metals are selected from sodium, potassium and mixtures of sodium and potassium, a SAR of 7 to 9, and a BET surface area of from 600 to 750 m²/g.

2. Crystalline copper-containing small-pore aluminosilicate zeolites according to claim 1, wherein the copper to aluminium atomic ratio is in the range of between 0.003 to 0.6.

3. Crystalline copper-containing small-pore aluminosilicate zeolites according to claim 1 or 2, wherein the crystallite size is between 10 and 5000 nm.

4. Process for the manufacture of a crystalline, copper-containing small-pore aluminosilicate zeolite having a maximum pore size of eight tetrahedral atoms, wherein the zeolite is CHA, has a copper content of from 2 to 7 wt.-%, calculated as CuO and based on the total weight of the zeolite, and a content of alkali metal cations in a total amount of 0.1 to 0.4 wt.-%, calculated as pure metals and based on the total weight of the zeolite, wherein the alkali metals are selected from sodium, potassium and mixtures of sodium and potassium, a SAR of 7 to 9, and a BET surface area of from 600 to 750 m²/g, which comprises
• preparing an aqueous reaction mixture comprising a zeolite of the faujasite framework type, Cu-tetraethylenepentamine (Cu-TEPA) and at least one compound M(OH)ₓ, wherein M(OH)x is NaOH and/or KOH, and
∘ wherein Cu-TEPA is used in an amount of 0.0001 mole/wt Cu-TEPA/FAU zeolite to 0.0016 mole/wt Cu-TEPA/FAU zeolite, and
∘ wherein M(OH)ₓ is used in an amount of 0.001 mole/wt M(OH)ₓ/FAU zeolite to 0.025 mole/wt M(OH)ₓ/FAU zeolite, and
• heating the reaction mixture to form a copper containing small-pore zeolite, at temperatures of 80 to 150°C for 2 to 31 days,
• calcining the copper containing small-pore zeolite for 1 to 5 hours at temperatures between 500°C and 650°C, followed by adjusting the copper and alkali metal content of said zeolite via ion exchange
or
• adjusting the copper and alkali metal content of the copper containing small-pore zeolite via ion exchange, followed by calcining said zeolite for 1 to 5 hours at temperatures between 500°C and 650°C.

5. A process according to claim 4, which comprises
• preparing an aqueous reaction mixture comprising a zeolite of the faujasite framework type, Cu-tetraethylenepentamine (Cu-TEPA) and at least one compound M(OH)ₓ, wherein
• M(OH)x is NaOH and/or KOH, and
∘ wherein Cu-TEPA is used in an amount of 0.0001 mole/wt Cu-TEPA/FAU zeolite to 0.0016 mole/wt Cu-TEPA/FAU zeolite, and
∘ wherein M(OH)ₓ is used in an amount of 0.001 mole/wt M(OH)ₓ/FAU zeolite to 0.025 mole/wt M(OH)ₓ/FAU zeolite, and
• which aqueous reaction mixture does not comprise the tetraethylammonium cation and
• heating the reaction mixture to form a copper containing small-pore zeolite, at temperatures of 80 to 150°C for 2 to 31 days,
• calcining the copper containing small-pore zeolite for 1 to 5 hours at temperatures between 500°C and 650°C, followed by adjusting the copper and alkali metal content of said zeolite via ion exchange
or
• adjusting the copper and alkali metal content of the copper containing small-pore zeolite via ion exchange, followed by calcining said zeolite for 1 to 5 hours at temperatures between 500°C and 650°C.

6. Process according to claim 4 or 5, wherein tetraethylenepentamine is the only structure directing agent in the reaction mixture.

7. Process according to any one of claims 4 to 6, wherein the zeolite of the faujasite framework type has a Si/AI ratio in the range from 5 to 30.

8. A washcoat comprising a crystalline aluminosilicate zeolite according to any one of claims 1 to 3.

9. Use of a crystalline aluminosilicate zeolite according to any one of claims 1 to 3 in SCR catalysis.

10. An SCR catalyst comprising a crystalline aluminosilicate zeolite according to any one of claims 1 to 3.

11. An SCR catalyst comprising the washcoat according to claim 8.

12. An exhaust gas purification system containing an SCR catalyst according to claim 10 or 11.

## Patentansprüche

1. Kristalline kupferhaltige kleinporige Alumosilikatzeolithe, die eine maximale Porengröße von acht tetraedrischen Atomen aufweisen, wobei der Zeolith CHA ist, einen Kupfergehalt von 2 bis 7 Gew.-% aufweist, berechnet als CuO und bezogen auf das Gesamtgewicht des Zeolithen, und einen Gehalt an Alkalimetallkationen in einer Gesamtmenge von 0,1 bis 0,4 Gew.-%, berechnet als reine Metalle und bezogen auf das Gesamtgewicht des Zeolithen, wobei die Alkalimetalle ausgewählt sind aus Natrium, Kalium und Mischungen von Natrium und Kalium, einem SAR von 7 bis 9 und einer BET-Oberfläche von 600 bis 750 m²/g.

2. Kristalline kupferhaltige kleinporige Alumosilikatzeolithe nach Anspruch 1, wobei das Atomverhältnis von Kupfer zu Aluminium im Bereich zwischen 0,003 und 0,6 liegt.

3. Kristalline kupferhaltige kleinporige Alumosilikatzeolithe nach Anspruch 1 oder 2, wobei die Kristallitgröße zwischen 10 und 5000 nm liegt.

4. Verfahren zur Herstellung eines kristallinen kupferhaltigen kleinporigen Alumosilikatzeolithen, der eine maximale Porengröße von acht tetraedrischen Atomen aufweist, wobei der Zeolith CHA ist, einen Kupfergehalt von 2 bis 7 Gew.-% aufweist, berechnet als CuO und bezogen auf das Gesamtgewicht des Zeolithen, und einen Gehalt an Alkalimetallkationen in einer Gesamtmenge von 0,1 bis 0,4 Gew.-%, berechnet als reine Metalle und bezogen auf das Gesamtgewicht des Zeolithen, wobei die Alkalimetalle ausgewählt sind aus Natrium, Kalium und Mischungen von Natrium und Kalium, einem SAR von 7 bis 9 und einer BET-Oberfläche von 600 bis 750 m²/g, umfassend
• Herstellen einer wässrigen Reaktionsmischung, umfassend einen Zeolithen vom Faujasit-Gerüsttyp, Cu-Tetraethylenpentamin (Cu-TEPA) und mindestens eine Verbindung M(OH)ₓ, wobei M(OH)ₓ NaOH und/oder KOH ist, und
∘ wobei Cu-TEPA in einer Menge von 0,0001 Mol/Gew. Cu-TEPA/FAU Zeolith bis 0,0016 Mol/Gew. Cu-TEPA/FAU Zeolith verwendet wird, und
∘ wobei M(OH)ₓ in einer Menge von 0,001 Mol/Gew. M(OH)ₓ/FAU-Zeolith bis 0,025 Mol/Gew. M(OH)ₓ/FAU-Zeolith verwendet wird, und
• Erwärmen der Reaktionsmischung für 2 bis 31 Tage bei Temperaturen von 80 bis 150 °C, um einen kupferhaltigen kleinporigen Zeolithen zu bilden,
• Kalzinieren des kupferhaltigen kleinporigen Zeolithen für 1 bis 5 Stunden bei Temperaturen zwischen 500 °C und 650 °C, gefolgt von Einstellen des Kupfer- und Alkalimetallgehalts des Zeolithen durch lonenaustausch oder
• Einstellen des Kupfer- und Alkalimetallgehalts des kupferhaltigen kleinporigen Zeolithen durch lonenaustausch, gefolgt von Kalzinieren des Zeolithen für 1 bis 5 Stunden bei Temperaturen zwischen 500 °C und 650 °C.

5. Verfahren nach Anspruch 4, das umfasst
• Herstellen einer wässrigen Reaktionsmischung, umfassend einen Zeolithen vom Faujasit-Gerüsttyp, Cu-Tetraethylenpentamin (Cu-TEPA) und mindestens eine Verbindung M(OH)ₓ, wobei
• M(OH)ₓ NaOH und/oder KOH ist, und
∘ wobei Cu-TEPA in einer Menge von 0,0001 Mol/Gew. Cu-TEPA/FAU Zeolith bis 0,0016 Mol/Gew. Cu-TEPA/FAU Zeolith verwendet wird, und
∘ wobei M(OH)ₓ in einer Menge von 0,001 Mol/Gew. M(OH)ₓ/FAU-Zeolith bis 0,025 Mol/Gew. M(OH)ₓ/FAU-Zeolith verwendet wird, und
• wobei die wässrige Reaktionsmischung das Tetraethylammoniumkation nicht umfasst, und
• Erwärmen der Reaktionsmischung für 2 bis 31 Tage bei Temperaturen von 80 bis 150 °C, um einen kupferhaltigen kleinporigen Zeolithen zu bilden,
• Kalzinieren des kupferhaltigen kleinporigen Zeolithen für 1 bis 5 Stunden bei Temperaturen zwischen 500 °C und 650 °C, gefolgt von Einstellen des Kupfer- und Alkalimetallgehalts des Zeolithen durch lonenaustausch oder
• Einstellen des Kupfer- und Alkalimetallgehalts des kupferhaltigen kleinporigen Zeolithen durch lonenaustausch, gefolgt von Kalzinieren des Zeolithen für 1 bis 5 Stunden bei Temperaturen zwischen 500 °C und 650 °C.

6. Verfahren nach Anspruch 4 oder 5, wobei Tetraethylenpentamin das einzige Struktursteuerungsmittel in der Reaktionsmischung ist.

7. Verfahren nach einem der Ansprüche 4 bis 6, wobei der Zeolith vom Faujasit-Gerüsttyp ein Si/Al-Verhältnis im Bereich von 5 bis 30 aufweist.

8. Washcoat, umfassend einen kristallinen Alumosilikatzeolithen nach einem der Ansprüche 1 bis 3.

9. Verwendung eines kristallinen Alumosilikatzeolithen nach einem der Ansprüche 1 bis 3 in der SCR-Katalyse.

10. SCR-Katalysator, umfassend einen kristallinen Alumosilikatzeolithen nach einem der Ansprüche 1 bis 3.

11. SCR-Katalysator, umfassend den Washcoat nach Anspruch 8.

12. Abgasreinigungssystem, enthaltend einen SCR-Katalysator nach einem der Ansprüche 10 oder 11.

## Revendications

1. Zéolites d'aluminosilicate cristallines à petits pores contenant du cuivre ayant une taille maximale de pore de huit atomes tétraédriques, dans lesquelles la zéolite est CHA, a une teneur en cuivre allant de 2 à 7 % en poids, calculée en tant que CuO et sur la base du poids total de la zéolite, et une teneur en cations de métal alcalin en une quantité totale de 0,1 à 0,4 % en poids, calculée en tant que métaux purs et sur la base du poids total de la zéolite, dans lesquelles les métaux alcalins sont choisis parmi les sodium, potassium et mélanges de sodium et de potassium, un SAR de 7 à 9, et une surface spécifique BET allant de 600 à 750 m²/g.

2. Zéolites d'aluminosilicate cristallines à petits pores contenant du cuivre selon la revendication 1, dans lesquelles le rapport atomique du cuivre à l'aluminium est dans la plage comprise entre 0,003 et 0,6.

3. Zéolites d'aluminosilicate cristallines à petits pores contenant du cuivre selon la revendication 1 ou 2, dans lesquelles la taille de cristallite est comprise entre 10 et 5000 nm.

4. Procédé pour la fabrication d'une zéolite d'aluminosilicate cristalline à petits pores contenant du cuivre ayant une taille maximale de pore de huit atomes tétraédriques, dans lequel la zéolite est CHA, a une teneur en cuivre allant de 2 à 7 % en poids, calculée en tant que CuO et sur la base du poids total de la zéolite, et une teneur en cations de métal alcalin en une quantité totale de 0,1 à 0,4 % en poids, calculée en tant que métaux purs et sur la base du poids total de la zéolite, dans lequel les métaux alcalins sont choisis parmi les sodium, potassium et mélanges de sodium et de potassium, un SAR de 7 à 9, et une surface spécifique BET allant de 600 à 750 m²/g, qui comprend
• la préparation d'un mélange réactionnel aqueux comprenant une zéolite du type d'ossature faujasite, de la Cu-tétraéthylène-pentamine (Cu-TEPA) et au moins un composé M(OH)ₓ, dans lequel M(OH)ₓ est NaOH et/ou KOH, et
∘ dans lequel la Cu-TEPA est utilisée en une quantité de 0,0001 mole/poids de Cu-TEPA/zéolite FAU à 0,0016 mole/poids de Cu-TEPA/zéolite FAU, et
∘ dans lequel M(OH)ₓ est utilisé en une quantité de 0,001 mole/poids de M(OH)ₓ/zéolite FAU à 0,025 mole/poids de M(OH)ₓ/zéolite FAU, et
• le chauffage du mélange réactionnel pour former une zéolite à petits pores contenant du cuivre, à des températures de 80 à 150 °C pendant 2 à 31 jours,
• la calcination de la zéolite à petits pores contenant du cuivre pendant 1 à 5 heures à des températures entre 500 °C et 650 °C, suivie par un ajustement de la teneur en cuivre et en métal alcalin de ladite zéolite par l'intermédiaire d'un échange ionique ou
• l'ajustement de la teneur en cuivre et en métal alcalin de la zéolite à petits pores contenant du cuivre par l'intermédiaire d'un échange ionique, suivi par une calcination de ladite zéolite pendant 1 à 5 heures à des températures entre 500 °C et 650 °C.

5. Procédé selon la revendication 4, qui comprend
• la préparation d'un mélange réactionnel aqueux comprenant une zéolite du type d'ossature faujasite, de la Cu-tétraéthylène-pentamine (Cu-TEPA) et au moins un composé M(OH)ₓ, dans lequel
• M(OH)ₓ est NaOH et/ou KOH, et
∘ dans lequel la Cu-TEPA est utilisée en une quantité de 0,0001 mole/poids de Cu-TEPA/zéolite FAU à 0,0016 mole/poids de Cu-TEPA/zéolite FAU, et
∘ dans lequel M(OH)ₓ est utilisé en une quantité de 0,001 mole/poids de M(OH)ₓ/zéolite FAU à 0,025 mole/poids de M(OH)ₓ/zéolite FAU, et
• lequel mélange réactionnel aqueux ne comprend pas de cation tétraéthylammonium et
• le chauffage du mélange réactionnel pour former une zéolite à petits pores contenant du cuivre, à des températures de 80 à 150 °C pendant 2 à 31 jours,
• la calcination de la zéolite à petits pores contenant du cuivre pendant 1 à 5 heures à des températures entre 500 °C et 650 °C, suivie par un ajustement de la teneur en cuivre et en métal alcalin de ladite zéolite par l'intermédiaire d'un échange ionique ou
• l'ajustement de la teneur en cuivre et en métal alcalin de la zéolite à petits pores contenant du cuivre par l'intermédiaire d'un échange ionique, suivi par une calcination de ladite zéolite pendant 1 à 5 heures à des températures entre 500 °C et 650 °C.

6. Procédé selon la revendication 4 ou 5, dans lequel la tétraéthylène-pentamine est le seul agent directeur de structure dans le mélange réactionnel.

7. Procédé selon l'une quelconque des revendications 4 à 6, dans lequel la zéolite du type d'ossature faujasite a un rapport Si/AI dans la plage allant de 5 à 30.

8. Couche d'imprégnation comprenant une zéolite d'aluminosilicate cristalline selon l'une quelconque des revendications 1 à 3.

9. Utilisation d'une zéolite d'aluminosilicate cristalline selon l'une quelconque des revendications 1 à 3 dans une catalyse à réduction catalytique sélective (SCR).

10. Catalyseur SCR comprenant une zéolite d'aluminosilicate cristalline selon l'une quelconque des revendications 1 à 3.

11. Catalyseur SCR comprenant la couche d'imprégnation selon la revendication 8.

12. Système de purification des gaz d'échappement contenant un catalyseur SCR selon la revendication 10 ou 11.
